# EUROPEAN PATENT APPLICATION

(11) **EP 1 962 025 A2**
(43) Date of publication of application: **27.08.2008**
(21) Application number: 08151958.9
(22) Date of filing: 26.02.2008
(51) Int. Cl.: F24D 19/10

(54) **A control valve assembly**

(30) Priority: 26.02.2007 GB 0703680
(71) Applicant: ALLEY ENTERPRISES LIMITED, Birr, County Offaly (IE)
(72) Inventor: Brooksbank, Denis, Weardale, County Durham DL13 2XG (GB); Sawers, Neil Arthur, Devizes, Wiltshire (GB)
(74) Representative: O'Connor, Donal Henry

(57) **Abstract**

A control valve assembly (1) for a water heating system (10) is such that it diverts water between a passive heat source (12) such as a solar panel and a fuel fired boiler (11) so that the temperature in a water supply storage tank (13) and the temperature of the water within the water heating system (10) and particularly feed water to a fuel fired boiler (11) do not exceed optimum temperatures.

## Description

The present invention relates to a control valve assembly for a water heating system of the type comprising: a passive heat source; a fuel-fired boiler having a predetermined maximum allowable feed water temperature; a cold water source including a water supply storage tank; and the water system having a predetermined maximum allowable system water temperature.

Such systems have certain problems that arise not because the systems are basically defective, but because when originally designed and specified, these systems were not envisaged for use with passive heat sources. The term passive heat source is used in this specification to include for example solar heating panels and associated pipework and equipment, geothermal devices and so on. The boilers were often referred as "combi" heaters where they were designed to accept feedwater below a certain temperature. Therefore if, for example, they were to be used in combination with solar panels and the water from the solar panels was to be fed directly to the boiler whether it be a gas-fired, solid fuel or oil or kerosene fired, there would be a problem in that the equipment would not necessarily be able to handle feed temperatures above a critical temperature. Even in more modern systems, it is not, in many instances, desirable for reasons of cost and safety to have high temperature boiler feed water.

Further, there is a need to have a system whereby if the water being delivered from, for example, a solar panel assembly is above some pre-determined value that that water should be fed directly to the system and not to the fuel-fired boiler.

It has long been known to have thermostatically controlled mixer valves to accept cold water and mix it with for example hot water coming from a boiler to give a thermostatically controlled system supply water for subsequent use. In this way, for example, such thermostatically controlled valves are used to control the temperature of the water delivered out of taps, showers and like. Similarly they are also used to control the temperature of radiators etc.

Japanese Patent Specification No. 60011060A (Sharp K) describes a system used to avoid heat loss and boiling of water in water heating systems. It uses a mixing and diverting valve for solar and conventional boiler operation so that hot water can be delivered without any further heating when it exceeds a set temperature and, when below this set temperature, is diverted to the conventional boiler.

Similarly, German Patent Specification No. DE 10212072A (Bosch) describes the use of a four-way valve to connect, if required, the output of a solar heating through a flow heater.

Japanese Patent Specification No. JP 60159526A (Sharp K) again describes a solar panel and a conventional auxiliary boiler or heat source machine with a suitable mixing valve to regulate direct draw-off from a hot water reserve or storage tank so that, as necessary, the auxiliary boiler heats some or all of the water from the storage tank.

None of these arrangements solve the problem to which the present invention is directed, namely ensuring that the water delivered to the boiler, often in conventional systems without passive heat sources called return water or boiler feed water, is not at too high a temperature. Thus, when the passive heat source is added, problems arise. Further, it is a problem that would not be immediately obvious to manufacturers and maintainers of such systems in that the problems usually arise some considerable after the passive heat source has been connected by a valve, such as described in the specifications referenced above, with a solar panel or other passive heat source.

Further, the term in this specification "cold water" also includes return water of the system since in many instances it is preferable to mix what is effectively return water in a heating system with other water to provide the correct temperature rather than to introduce totally cold water from a separate source. However, again when the hot water in the system is being drawn-off, there is a need for an external supply of additional water.

The present invention is directed towards overcoming these problems.

### Statements of Invention

According to the invention there is provided a control valve assembly for a water heating system of the type comprising: a passive heat source; a fuel fired boiler having a predetermined maximum allowable feed water temperature; a cold water source including a water supply storage tank; and the water system having a predetermined maximum allowable system water temperature; characterised in that the control valve assembly comprises:
a thermostatically controlled diverter valve for connection to: the passive heat source; to a thermostatically controlled boiler feed mixer valve; and to a thermostatically controlled system supply water mixer valve;
the boiler feed mixer valve being further connected to the cold water source and the fuel fired boiler; and
the supply mixer valve being further connected to the cold water source and to the water heating system.

The cold water source comprises at least one of a separate cold water supply and system return water.

Ideally, the control valve assembly is formed in a single valve block.

Further the invention provides a method of controlling the operation of the heating system using a valve assembly as described above in which the diverter valve delivers hot water to the system supply water mixer valve when the temperature of the water from the passive heat source exceeds a preset diverter water temperature and to the boiler feed mixer valve when it is less than the preset diverter water temperature; the preset diverter temperature is of the order of 40°C.

### Detailed Description of the Invention

The invention will be more clearly understood from the following description of some embodiments thereof, given by way of example only, with reference to the accompanying drawings, in which:
Fig. 1 is a block diagrammatic representation of a control valve assembly and water heating system according to the invention;
Fig. 2 is a front view of a control valve assembly according to the invention;
Fig. 3 is a plan sectional view along the lines A-A of Fig. 2;
Fig. 4(a) to (c) are vertical sectional views along the lines B-B, C-C and D-D respectively of Fig. 2;
Fig. 5 is a front view similar to Fig. 2 of an alternative construction of valve assembly according to the invention; and
Fig. 6 is a plan sectional view along the lines A-A of Fig. 5.

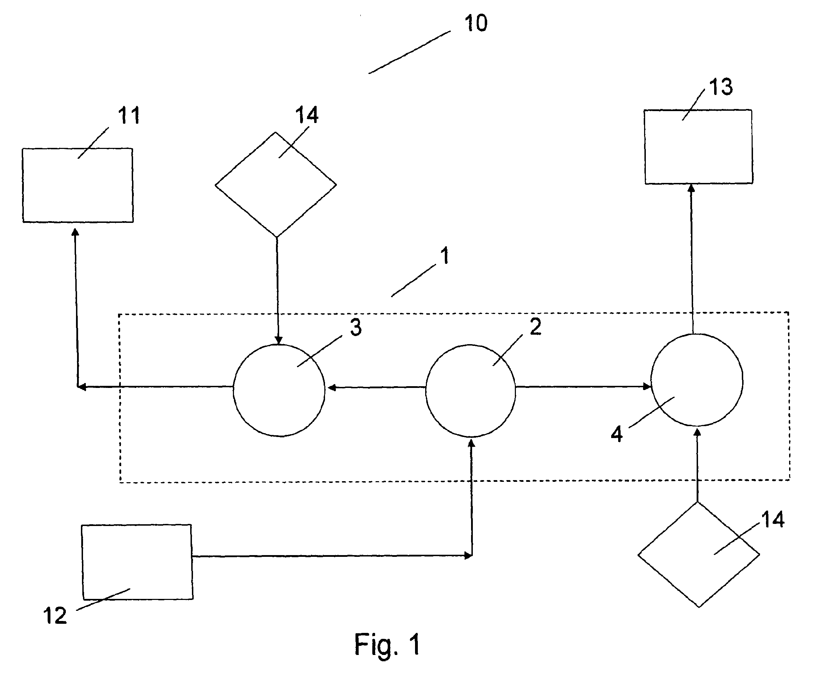

Referring to the drawings and initially to Fig. 1 thereof, there is provided a control valve assembly delineated by the interrupted lines and indicated generally by the reference numeral 1. The control valve assembly 1 forms part of a water heating system indicated generally by the reference numeral 10. The control valve assembly 1 comprises a thermostatically controlled diverter valve 2, a thermostatically controlled boiler feed mixer valve 3 and a thermostatically controlled system supply water mixer valve 4. The water heating system 10 comprises a fuel-fired boiler 11 having a predetermined maximum allowable feed water temperature, a passive heat source in this case solar panels 12, together with necessary control equipment, a water supply storage tank 13 which feeds draw-off taps, radiators and any other devices requiring the heated water. There is also identified a cold water source 14 which could for example be return water from the heat output and water supply 13 or a separate cold water supply. Only some of the connections between the various items of equipment are identified. The diverter valve 2 is fed directly with hot water by the solar panels 12. The diverter valve is connected to both the boiler feed mixer valve 3 and the thermostatically controlled system supply water mixer valve 4.

In operation, water is delivered from the solar panels 12 to the diverter valve 2 and then depending on the temperature of the water delivered from the solar panels 12, the diverter valve 2 sends the water to one of the thermostatically controlled boiler feed mixer valve 3 and the thermostatically controlled system supply water mixer valve 4. If the temperature is above a certain predetermined temperature then it is sent to the thermostatically controlled system supply water mixer valve 4 and if below that predetermined temperature it is sent to the thermostatically controlled boiler feed mixer valve 3. When sent to the thermostatically controlled boiler feed mixer valve 3, it is almost certainly, at too high a temperature for use in the system for delivery to the boiler and therefore water is delivered from the cold water source 14 to the thermostatically controlled boiler feed mixer valve 3 where it is mixed and the delivered to the fuel-fired boiler 11. In this way the fuel-fired boiler 11 does not receive feed water above a critical operation temperature for the rest of the system. When the water is delivered from the diverter valve 2 directly to the thermostatically controlled system supply water mixer valve 4 the temperature may be too high for delivery to the heat output and water supply storage tank 13 in which case water is drawn off from the cold water sources 14 and mixed in the thermostatically controlled system supply water mixer valve 4 and then delivered to the heat output and water supply storage tank13.

In this way the optimum supply of water may be achieved, the feed to the fuel-fired boiler is protected in use and the optimum usage of, for example, a passive heating system is achieved.

Generally speaking, when the temperature of the water exceeds 40°C from the passive heat source, the water is directly usable after delivery to the storage tank 13. When it is less than that it needs to be sent to the fuel-fired boiler 11, but at that temperature it is very often too hot for delivery to the fuel-fired boiler 11 and thus the temperature has to be reduced before it is fed to the boiler 11.

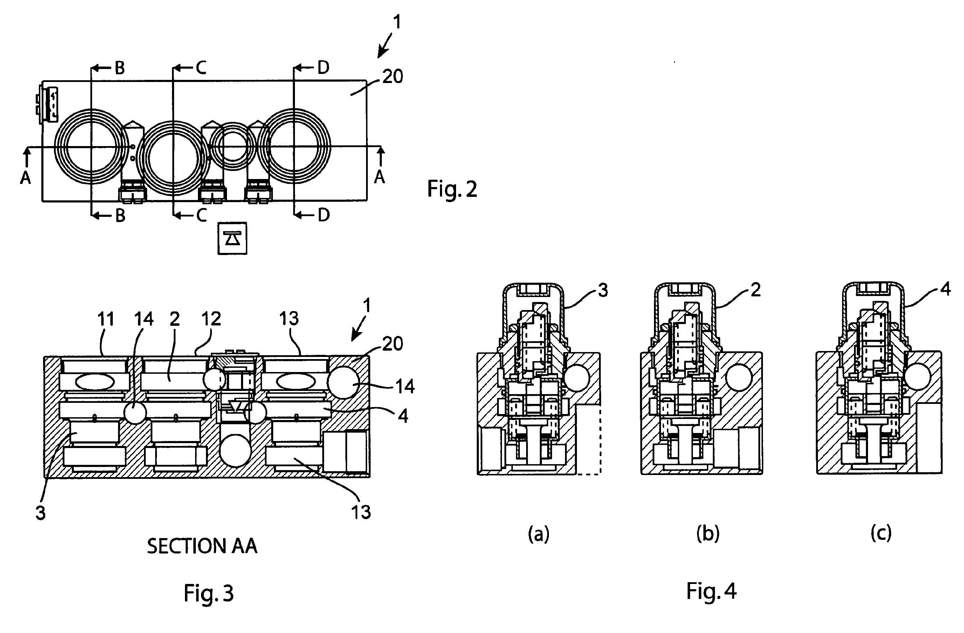

Referring now to Figs. 2 to 4 inclusive, there is illustrated a construction of control valve assembly 1. It will be seen that there is one block 20 which incorporates the thermostatically controlled diverter valve 2, a thermostatically controlled boiler feed mixer valve 3 and thermostatically controlled system supply water mixer valve 4. The connection between the various valves can be seen from the drawings. Some of the connections, for example, delivery from the cold water source 14 are illustrated by circled numerals. However, any attempt to show too many of these connections merely confuses the issue. Essentially the valves are conventional in construction.

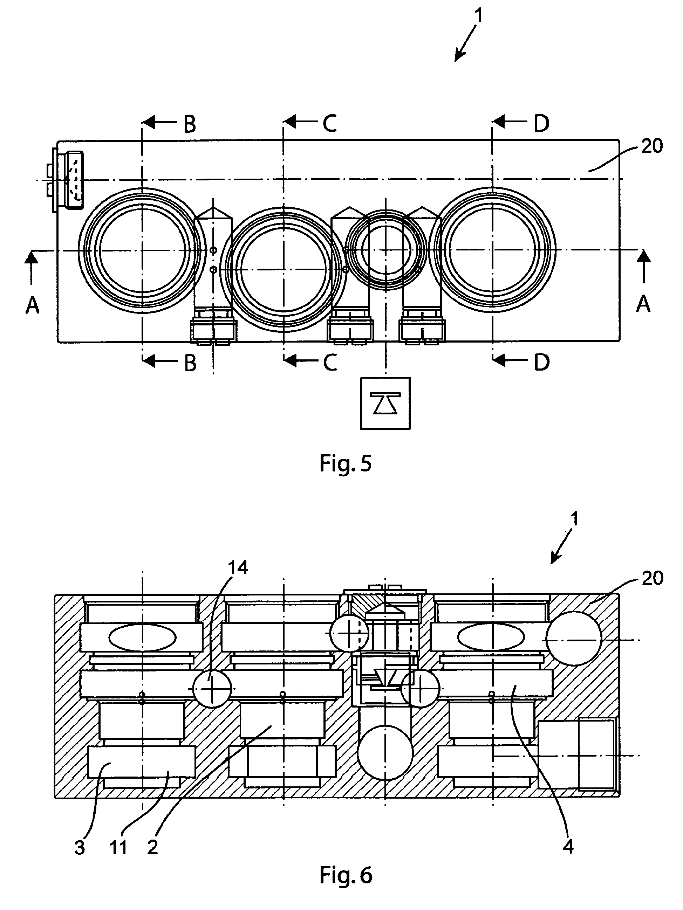

Referring now to Figs. 5 and 6, there is illustrated a still further construction of valve assembly, again, for ease of reference, identified by the same reference numeral 1 in which parts similar to those described previously are assigned the same reference numerals. There is just a slightly different layout of the control valve assembly as described in Figs. 2 to 4.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail

## Claims

1. A control valve assembly (1) for a water heating system (10) of the type comprising: a passive heat source (12); a fuel fired boiler (11) having a predetermined maximum allowable feed water temperature; a cold water source (14) including a water supply storage tank (13); and the water system (10) having a predetermined maximum allowable system water temperature; **characterised in that** the control valve assembly comprises:
a thermostatically controlled diverter valve (2) for connection to: the passive heat source (12); to a thermostatically controlled boiler feed mixer valve (3); and to a thermostatically controlled system supply water mixer valve (4);
the boiler feed mixer valve (3) being further connected to the cold water source (14) and the fuel fired boiler (11); and
the supply mixer valve (4) being further connected to the cold water source (14) and to the water heating system (10).

2. A control valve assembly (1) as claimed in claim 1 in which the cold water source (14) comprises at least one of a separate cold water supply and system return water.

3. A control valve assembly (1) as claimed in claim 1 or 2 in which the control valve assembly (1) is formed in a single valve block.

4. A method of controlling the operation of the heating system (10) using a control valve assembly (1) as claimed in any preceding claim in which the diverter valve (2) delivers hot water to the system supply water mixer valve (4) when the temperature of the water from the passive heat source (12) exceeds a preset diverter water temperature and to the boiler feed mixer valve (3) when it is less than the preset diverter water temperature.

5. A method as claimed in claim 4 in which the preset diverter temperature is of the order of 40°C.
